# EUROPEAN PATENT APPLICATION

(11) **EP 0 967 463 A2**
(43) Date of publication of application: **29.12.1999**
(21) Application number: 99303943.7
(22) Date of filing: 20.05.1999
(51) Int. Cl.: G01D 7/00

(54) **Measuring instrument comprising a help system**

(30) Priority: 25.06.1998 US 106382
(71) Applicant: TEKTRONIX, INC., Wilsonville, Oregon 97070 (US)
(72) Inventor: Guiberson, Kelcie, Portland, Oregon 97225 (US); Damm, Wendell W., Beaverton, Oregon 97007 (US); Saxonberg, Fred, Aloha, Oregon 97007 (US)
(74) Representative: Burke, Steven David

(57) **Abstract**

A method and apparatus for providing application control in a measurement instrument help system. In one embodiment, a help window overlays a primary window then the help system is active. The help window describes one or more steps involved in performing a desired operation. The help system further includes controls (e.g., icons or other representations) associated with steps described in the help window. When a user selects a control, the associated step is performed automatically by the measurement instrument. In one embodiment, the help window includes a graphical representation of a control panel for use with a measurement instrument that changes settings of the control panel in response to manipulations of the graphical representation.

## Description

### FIELD OF THE INVENTION

The present invention relates to measurement instruments. More particularly, the present invention relates to help systems that provide application control.

### BACKGROUND OF THE INVENTION

In general, windows are of two types: primary and secondary. Primary windows are the windows in which the primary use of an application occurs. For example, in a word processing application, the primary window is the text editing and formatting window. Secondary windows are any windows other than the primary window generated by an application. For example, dialog boxes, print control windows, etc. are secondary windows.

Prior art help typically takes the form of either a printed user manual and/or on-line help that is part of the program being used. Printed user manuals allow a user to obtain information without physically covering primary and secondary windows generated by an application being used. However, printed user manuals tend to be extremely detailed in order to cover many possible uses and features of the associated application. Printed user manuals also require a user to match elements presented in the manual to elements of the corresponding application, which may be tedious and/or confusing for a user.

On-line help systems provide an advantage over printed user manuals because on-line help can be designed to respond to a user\rquote s particular situation by providing context-sensitive help. On-line help can also provide "chunks" of help that provide a single, or relatively few steps for a user to perform and then providing a subsequent chunk with subsequent steps. Such help systems reduce the number of steps a user must memorize to achieve a desired result.

However, because measurement instrument displays tend to be relatively small and real-time measurement is maintained when help is selected, use of an on-line help system typically covers the measurement information formerly displayed in primary or secondary windows. Thus, prior art on-line help systems obscure measurement data displayed by a measurement instrument.

What is needed is an improved on-line help system for use with measurement instruments.

### SUMMARY OF THE INVENTION

A method and apparatus for providing application control in a software help system of a measurement instrument is described. A help window for providing help is displayed on a display of a measurement instrument. A control is displayed within the window indicating a task to perform a desired operation. The task is performed automatically when the control is selected.

### BRIEF DESCRIPTION OF THE DRAWINGS

The present invention is illustrated by way of example, and not by way of limitation, in the figures of the accompanying drawings in which like reference numerals refer to similar elements.

**Figure 1** is one embodiment of a block diagram of a measurement instrument.

**Figure 2A** is one embodiment of a hardware block diagram of a user interface system for a measurement instrument.

**Figure 2B** is one embodiment of a software block diagram of a user interface system for a measurement instrument.

**Figure 3** is one embodiment of a measurement instrument displaying a primary application window and a help window.

### DETAILED DESCRIPTION

A method and apparatus for providing application control in a help system of a measurement instrument is described. In the following description, for purposes of explanation, numerous specific details are set forth in order to provide a thorough understanding of the present invention. It will be apparent, however, to one skilled in the art that the present invention can be practiced without these specific details. In other instances, well-known structures and devices are shown in block diagram form in order to avoid obscuring the present invention.

The present invention provides a method and apparatus for providing application control within a software implemented help system in a measurement instrument. In one embodiment, a primary help window overlays a primary or secondary window of an application when the help system is active. The help window describes one or more steps involved in performing a desired operation.

The help system further includes application controls associated with steps described in the help window. When a user selects an application control, the associated step is performed automatically by the measurement instrument. Thus, the primary help window remains overlaying the application window(s) such that the user can continue use of the help window without reactivating the help window. In one embodiment, the help window includes a graphical representation of a control panel for use with a measurement instrument that changes settings of the control panel in response manipulations of the graphical representation.

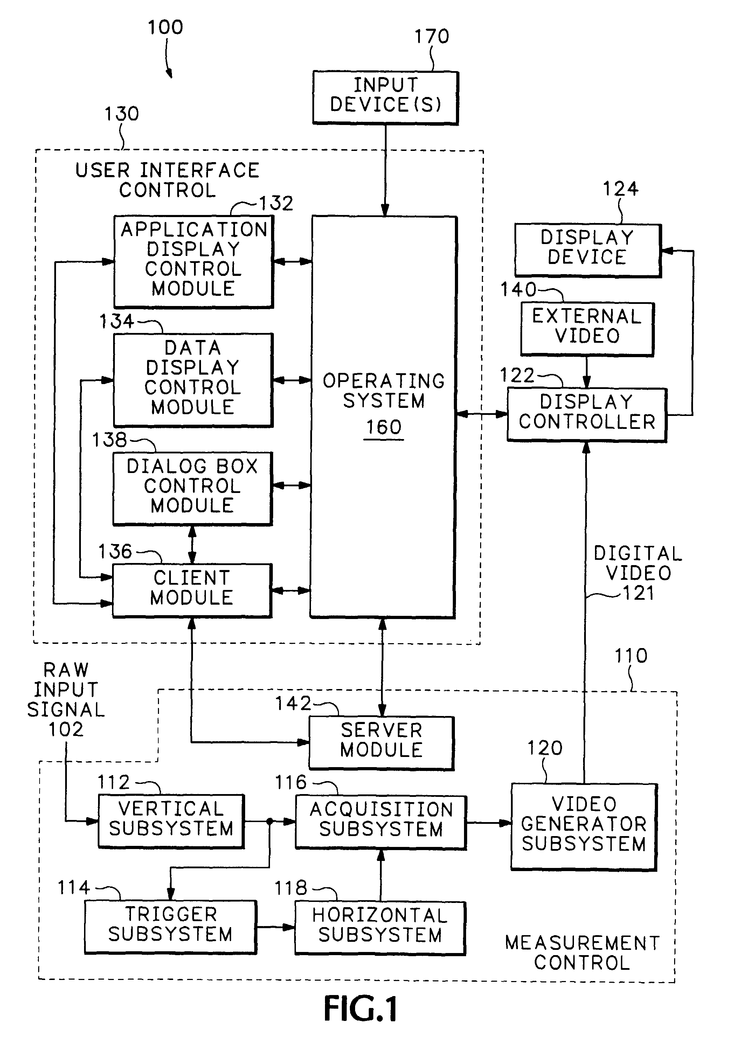

**Figure 1** is one embodiment of a hardware block diagram of measurement instrument 100 including measurement control 110 and user interface control 130. Measurement control 110 includes vertical subsystem 112, trigger subsystem 114, acquisition subsystem 116, horizontal subsystem 118, and video generation subsystem 120. Input signals 102 are provided to measurement instrument 100 at measurement control 110. Subsystems 112 - 120 are intended to represent a broad category of these elements known in the art. Each of elements 112 - 120 performs its conventional functions, and the elements' constitutions are known. Accordingly, elements 112-120 will not be further described except as they pertain to the present invention.

Display controller 122 controls the display of video and graphics on display device 124. Graphics data from operating system 160 is written into a frame buffer (not shown) in or corresponding to display controller 122. Additionally, measurement control 110 provides digital video output 121 to display controller 122. The digital video output 121 is scaled as necessary by display controller 122 and displayed within a portion of the display device 124 as defined by either data display control module 134 or dialog box control module 138.

Display controller 122 combines the graphics data from operating system 160 and the digital video output 121, allowing both to be displayed concurrently on display device 124. According to one embodiment, display device 124 is a 640x480 resolution LCD display. However, different resolutions as well as different types of displays (e.g., a cathode-ray tube (CRT)) can be used. Additionally, according to one implementation, display controller 122 is a video and graphics LCD/CRT controller model number CL-GD7556 available from Cirrus Logic of Fremont, California.

User interface control 130 provides a graphical user interface (GUI) which allows a user to interact with measurement instrument 100. Application display control module 132 provides control of an application window while data display control module 134 controls the definition of a data display area within the application window. The real-time data being received by measurement instrument 100 is displayed to users within this data display area.

In the illustrated embodiment, user interface control 130 is designed to operate with GUI operating system 160, such as Windows™ 95, Windows™ 98, or Windows™ CE, available from Microsoft Corporation of Redmond, Washington. Digital video signal 121 is provided to display controller 122, which displays the real-time data represented by digital video signal 121 on display device 124 within the data display window of the application. The location and size of such window is provided to display controller 122 by data display control module 134.

Application display control module 132 controls the display of an application window via operating system 160. Data display control module 134 controls the definition of the data display area (e.g., location and size) via operating system 160. The location of display device 124 where the data display area is to be displayed, as well as the size of the data display area, are provided to display controller 122 from data display control module 134 via operating system 160 using windowing services of the operating system.

One or more input devices 170 are also included as part of measurement instrument 100 to allow user input to operating system 160, and thus to allow a user to interact with user interface control 130. Examples of such input device(s) include alphanumeric keyboards and cursor control devices (e.g., mouse, trackball, trackpad, etc.). According to an alternate embodiment, display device 124 includes a conventional touch screen which allows a user to input selections to operating system 160 by simply touching particular areas of a screen of display device 124.

User interface control 130 also includes dialog box control module 138, which provides dialog box sizing information to display controller 122 via operating system 160, including the display location and size for a real-time data window within a dialog box. Display or real-time data is described in greater detail below.

Additionally, user interface control 130 includes a client module 136. Client module 136 communicates with server module 142 of measurement control 110 which allows user selections and control changes input to user interface control 130 to be provided to measurement control 110. Sever module 142 communicates user selections and control inputs received from client module 136 to the appropriate subsystem of measurement control 110.

Measurement control 110 maintains the current settings for the various programmable and user-changeable features (also referred to as "acquisition parameters") of subsystems 112 - 120. Such settings may be maintained in a centralized database accessible by subsystems 112 - 120, or alternatively may be maintained individually by the subsystems 112-120 in databases, registers, or the like. Examples of such user-changeable features include trigger levels, vertical scale adjustments, horizontal scale adjustments, etc. It is to be appreciated that the specific user-changeable features are dependent on the particular measurement instrument.

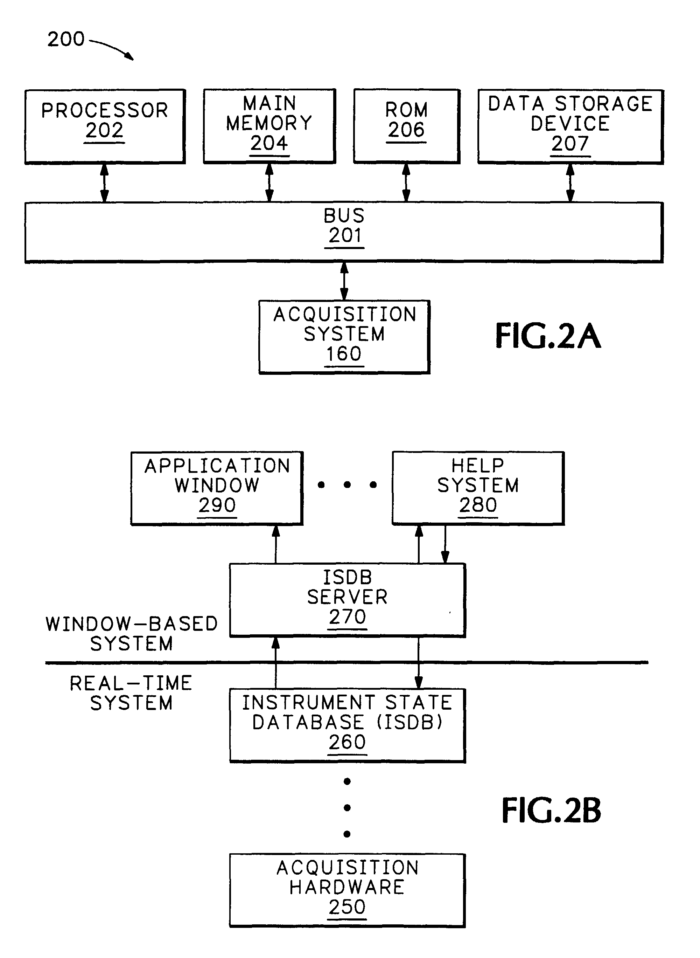

**Figure 2A** is one embodiment of a hardware block diagram of a user interface system for a measurement instrument. User interface system 200 comprises bus 201 or other communication device for communicating information, and processor 202 coupled with bus 201 for processing information. User interface system 200 further comprises random access memory (RAM) or other dynamic storage device 204 (referred to as main memory), coupled to bus 201 for storing information and instructions to be executed by processor 202. Main memory 204 also can be used for storing temporary variables or other intermediate information during execution of instructions by processor 202.

User interface system 200 also comprises read only memory (ROM) or other static storage device 206 coupled to bus 201 for storing static information and instructions for processor 202. Data storage device 207 is coupled to bus 201 for storing information and instructions. Data storage device 207 such as a magnetic disk or optical disc and its corresponding drive can be coupled to user interface system 200.

According to one embodiment of the present invention, the application control of the help system is provided by user interface system 200 in response to processor 202 executing sequences of instructions contained in memory 204. Instructions are provided to main memory 204 from a storage device, such as magnetic disk, CD-ROM, DVD, via a remote connection (e.g., over a network), etc. In alternative embodiments, hard-wired circuitry can be used in place of or in combination with software instructions to implement the present invention. Thus, the present invention is not limited to any specific combination of hardware circuitry and software.

**Figure 2B** is one embodiment of a software block diagram of a user interface system for a measurement instrument. In general, the measurement instrument of Figure 2B has two parts: 1) a real-time system; and 2) a window-based system. The real-time system acquires external signals as they occur in the test environment and stores related data, if necessary. The window-based system displays information describing the external signals in the format chosen by a user of the measurement instrument.

The real-time system includes acquisition hardware 250 and instrument state database (ISDB) 260. The real-time system also includes other software components (not shown in Figure 2) for capturing and interpreting signals from acquisition hardware 250. For simplicity of description, these other software components are not described herein because they are not central to the present invention.

The window-based system includes ISDB server 270, which interacts with ISBD 260 in the real time system to obtain information. In one embodiment, ISDB server 270 provides the only interface between the real-time system and the window-based system. By providing a single interface between the real-time system and the window-based system, information within the oscilloscope can be updated more easily than if multiple components in the window-based system access ISDB 260 independently.

Multiple applications access ISDB server 270 to obtain information from, or provide modifications to, ISDB 260. In the example of Figure 2B, two applications are executing (e.g., application window 290 and help system 280); however, any number of applications can be executed in the window-based system. In one embodiment, each application executed in the window-based system executes independently and interacts independently with ISDB server 270. In general, each application generates a primary window and can generate one or more secondary windows, such as dialog windows, etc.

In one embodiment, multiple application windows are displayed in the window-based system and the real-time data displayed by the measurement is constantly displayed. Further description of real-time data display in a measurement instrument is provided by U.S. Patent Application No. 09/106,048, entitled "ENHANCED DISPLAY OF A CONTROL WINDOW IN A MEASUREMENT INSTRUMENT" filed June 26, 1998 and assigned to the corporate assignee of the present invention, which is hereby incorporated by reference.

Some applications, for example application window 290 that is a primary window displaying a voltage waveform on the measurement instrument display, request and receive data from ISDB server 270, but does not modify ISDB 260. Other applications, such as help system 280, request and receive data from ISDB server 270 and modify ISDB 260 via ISDB server 270. With such a configuration, ISDB server 270 can serialize updates to ISDB 260 and provide consistent data to the multiple applications executing in the window-based system.

In one embodiment, help system 280 displays a help window on the measurement instrument display that includes application controls. Application controls are portions of the help system that perform specific tasks in response to the control being selected. The application controls are linked to the specific tasks described by the help window and are represented by an icon, a radio button, a checkbox, or other indicator. When a user of the measurement instrument selects one of the application controls (e.g., by clicking on an icon), the help system communicates the selection to ISDB server 270. ISDB server 270 then sends the selection to the application displaying window 290, which causes the new selection to be displayed and causes the acquisition hardware to perform the selected task. Thus, the application performs the tasks described in a help window in response to the user selecting an application control in the help window.

In one embodiment, the help window includes a graphical representation of the control panel of a measurement instrument. When the user modifies the graphical representation of the control panel, the modifications are communicated to ISDB server 270, which communicates the modifications to ISDB 260. Information received from acquisition hardware 250 is then processed according to the modified ISDB values. In response to the modified ISDB values, the application modifies the information displayed by the application window 290 in accordance with the graphical control panel manipulation. Thus, the present invention allows a user of a measurement instrument to control the measurement instrument from within the help system that provides help related to the specific control panel modifications.

Thus, the help system of the present invention having application control allows a user to select tasks to perform or have performed without covering the help window. Additionally, tasks can be performed for the user so that the user is not required to memorize the steps required to achieve a desired result. Therefore, the present invention simplifies use of applications having associated help systems as compared to the prior art.

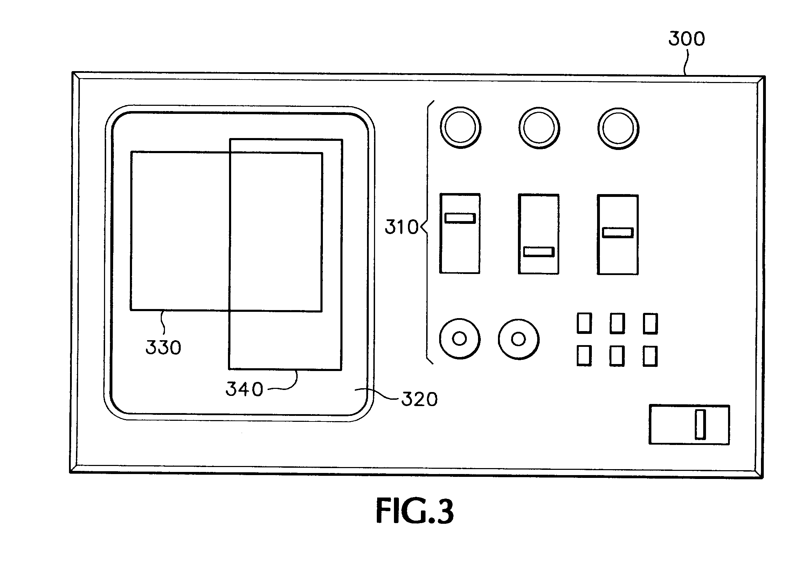

**Figure 3** is one embodiment of a display device displaying a primary application window and a help window. Notwithstanding being described in terms of a primary window on a measurement instrument and a help window for use with a measurement instrument, the example of Figure 3 applies equally to secondary windows and help windows as well as windows on other electronic devices, such as personal digital assistants (PDAs), copier systems, etc.

Measurement instrument 300 generally includes display device 320 and control panel 310. Application window 330 displayed on display device 320 is a primary window that displays signals for which measurement instrument is used to measure, for example, voltage. Control panel 310 allows a user to control measurement instrument 300. Because displays and control of measurement instruments are known in the art and not central to the present invention, use of control panels and displays are not described in greater detail herein.

When application window 330 is active a user of measurement instrument 300 can invoke on-line help in a variety of ways. For example, control panel 310 can include a help button, application window 330 can include a help icon, etc. When the help system is invoked, help window 340 is displayed on display device 320. If application window 330 is large enough, help window 340 overlays application window 330. Help window 340 may provide context-sensitive help, or help window 340 may provide more general help in which the user must navigate the help system for the desired help.

In one embodiment, help window 340 displays textual or graphical help. For example, help window 340 can describe the specific tasks required to accomplish a desired operation. In addition to textual help, help window 340 also includes a graphical description of the specific tasks required to accomplish the desired result. Help window 340 also displays an application control associated with help provided.

When the user of measurement instrument 310 selects the application control measurement instrument 310 automatically performs the associated tasks. In one embodiment help window 340 displays a graphical representation of control panel 310. When the user modifies the graphical representation of control panel 310 in help window 340, measurement instrument 300 displays data according to the modified control panel settings.

In the foregoing specification, the present invention has been described with reference to specific embodiments thereof. It will, however, be evident that various modifications and changes can be made thereto without departing from the broader spirit and scope of the invention. The specification and drawings are, accordingly, to be regarded in an illustrative rather than a restrictive sense.

## Claims

1. A method for providing help to an application having a window on a measurement instrument, the method comprising the steps of:
displaying a help window for providing information from a help system related to the application window, wherein the application windows displays graphical data representing a measurement being made;
displaying a control within the help windows indicating a task to perform a desired operation related to the application windows; and
performing a designated task automatically when the control is selected.

2. The method of claim 1, wherein the step of displaying a help windows for providing help comprises providing context-sensitive help.

3. The method of claim 1, wherein the step of performing one or more designated tasks automatically comprises graphically showing how a user would accomplish the designated task while performing the designated task automatically.

4. The method of claim 1, wherein the application generates an oscilloscope display.

5. The method of claim 1, further comprising the steps of:
maintaining an instrument state database (ISDB) storing data used by the help system and the application;
executing the application and help system independently based on the ISDB;
modifying the ISDB based on input provided to the help system; and
executing the application based on the modified ISDB.

6. A computer-readable medium having stored thereon sequences of instructions, which when executed cause a processor to:
display in an application window a graphical representation of measurements being made with a measurement instrument;
display a help window for providing information from a help system related to the application window, wherein the application window displays graphical data representing a measurement being made;
display a control within the window indicating a task to perform a desired operation related to the application window; and
perform a more designated task automatically when the control is selected.

7. The computer-readable medium of claim 6, wherein the sequence of instructions to display a window for providing help further cause the processor to provide context-sensitive help.

8. The computer-readable of claim 6, wherein the sequence of instructions to perform a designated task automatically further causes the processor to graphically show how a user would accomplish the designated task while performing the designated task automatically.

9. The computer-readable medium of claim 6, wherein the application generates an oscilloscope display.

10. The computer-readable medium of claim 6, further comprising sequences of instructions that cause the processor to:
maintain an instrument state database (ISDB) storing data used by the help system and the application;
execute the application and the help system independently based on the ISDB;
modify the ISDB based on input provided to the help system; and
execute the application based on the modified ISDB.

11. An apparatus for providing help within an application comprising:
means for displaying a help window for providing information from a help system related to the application window, wherein the application window displays graphical data representing a measurement being made;
means for displaying a control within the help window indicating a task to perform a desired operation related to the application window; and
means for performing a designated task automatically when the control indicating the designated task is selected.

12. The apparatus of claim 11, wherein the means for displaying a window for providing help further comprise means for providing context-sensitive help.

13. The apparatus of claim 11, wherein the means for performing a designated task automatically further comprises means for graphically showing how a user would accomplish the designated task while performing the designated task automatically.

14. The apparatus of claim 11, further comprising means for maintaining an instrument state database (ISDB) for use in independently executing the application and the help system, wherein the ISDB is modifiable by the help system.

15. A measurement instrument comprising:
a bus;
a memory coupled to the bus that stores an application;
a processor coupled to the bus that executes the application and causes a window to be displayed on a display device coupled to the bus, wherein the processor causes a help window for providing help from a help system to be displayed on the display device in response to a request for help, the help window further displaying automatically.

16. The measurement instrument of claim 15, wherein the help window provides context-sensitive help.

17. The measurement instrument of claim 15, wherein the application displays a series of tasks executed to accomplish a desired result described in the help window.

18. The measurement instrument of claim 15, wherein the memory further stores an instrument state database (ISDB) that stores machine state data used when executing the application and the help system independently.

19. The measurement instrument of claim 15, wherein the ISDB is updated via use of the help system.
